# EUROPÄISCHE PATENTSCHRIFT

(11) **EP 3 472 820 B1**
(45) Veröffentlichungstag und Bekanntmachung des Hinweises auf die Patenterteilung: **30.07.2025**
(21) Anmeldenummer: 17729423.8
(22) Anmeldetag: 01.06.2017
(51) Int. Cl.: G09B 29/00, G01C 21/32, G06F 16/29, G01C 21/00

(54) **AKTUALISIERUNG EINER DIGITALEN KARTE**
UPDATING A DIGITAL MAP
MISE À JOUR D'UNE CARTE NUMÉRIQUE

(30) Priorität: 21.06.2016 DE 102016211045
(43) Veröffentlichungstag der Anmeldung: 24.04.2019
(73) Patentinhaber: Bayerische Motoren Werke Aktiengesellschaft, 80809 München (DE)
(72) Erfinder: SCHECHTER, Dimitri, 80992 München (DE)
(86) Internationale Anmeldenummer: PCT/EP2017/063263
(87) Internationale Veröffentlichungsnummer: WO 2017/220307

(56) Entgegenhaltungen:
- WO-A1-2005/019773
- WO-A1-2005/019773
- DE-A1- 102007 048 264
- US-A1- 2012 130 944
- US-A1- 2012 130 944

## Beschreibung

Die vorliegende Erfindung betrifft ein Verfahren zur Aktualisierung einer in einem Fahrzeug gespeicherten digitalen Karte, ein Verfahren zur Durchführung eines Änderungsvorgangs einer in einer Zentraldatenbank gespeicherten digitalen Karte, ein Fahrzeug sowie einen Zentralrechner.

Moderne Fahrzeuge, insbesondere Kraftfahrzeuge, verfügen häufig über eingebaute Navigationssysteme, mit denen die aktuelle geografische Position des Kraftfahrzeugs bestimmt sowie eine Route zu einem Zielort berechnet werden kann. Für diese Berechnung verfügen Navigationssysteme über im Fahrzeug gespeicherte digitale Karten. Damit derartige im Fahrzeug gespeicherte digitale Karten stets auf einem möglichst aktuellen Stand sind, besteht das Bedürfnis, eine digitale Karte so häufig und so umfangreich wie möglich zu aktualisieren. Es ist bekannt, digitale Karten zu aktualisieren, indem ein Datenträger (z.B. eine CD, ein USB-Laufwerk o.Ä.) in das Fahrzeug eingebracht wird, auf welchem aktualisierte Kartendaten gespeichert sind. Ein solcher Datenträger kann entweder im Fahrzeug verbleiben, also den bisher im Fahrzeug befindlichen Datenträger der digitalen Karte ersetzen, oder sein Inhalt kann auf den im Fahrzeug befindlichen Datenträger der digitalen Karte kopiert werden.

Moderne Fahrzeuge weisen häufig Vorrichtungen zur drahtlosen Datenkommunikation mit fahrzeugexternen Kommunikationsteilnehmern auf. Beispielsweise können Fahrzeuge eingerichtet sein, über Mobilfunknetze Daten mit dem Internet auszutauschen. Derartige Datenkommunikationsvorrichtungen eröffnen eine weitere Möglichkeit zur Aktualisierung einer im Fahrzeug gespeicherten digitalen Karte, nämlich indem die aktualisierten Kartendaten über die Mobilfunkverbindung bezogen werden. Da in der Regel das Datenvolumen, welches über eine derartige Mobilfunkverbindung übertragen werden kann, aus technischen und wirtschaftlichen Gründen beschränkt ist, ist es problematisch, die gesamte digitale Karte über eine Mobilfunkverbindung zu aktualisieren.

Zur Lösung dieses Problems ist es bekannt, nicht die gesamte digitale Karte, sondern nur einzelne Kartenobjekte der digitalen Karte zu aktualisieren. Beispielsweise kann eine digitale Karte in geografische Regionen unterteilt werden. Bei einer Aktualisierung der digitalen Karte können beispielsweise nur solche Kartenobjekte aktualisiert werden, die sich in der gleichen geografischen Region wie das Fahrzeug befinden. Bei einer solchen partiellen Aktualisierung der digitalen Karte kann es zu Inkonsistenzen kommen. Darunter ist zu verstehen, dass die durch die Aktualisierung entstandene digitale Karte logische Ungereimtheiten aufweist. Wird beispielsweise durch eine Aktualisierung eine neue Straße hinzugefügt, ohne dass zugleich diejenigen Straßen, mit denen die neue Straße verbunden ist, ebenfalls aktualisiert werden, so könnte in der durch diese Aktualisierung entstandenen digitalen Karte die neue Straße "in der Luft hängen". Mit anderen Worten wiese diese digitale Karte zwar die neue Straße auf, jedoch keine Möglichkeit, auf diese Straße zu gelangen.

Unterschiedliche Verfahren zur Aktualisierung einer in Bereiche (auch als Kacheln, Partitionen oder "meshes" bezeichnet) unterteilten digitalen Karte offenbaren US 2012/0130944 A1, DE 10 2007 048 264 A1 und WO 2005/019773 A1. Den vorgeschlagenen Verfahren ist gemeinsam, dass anstelle der vollständigen Aktualisierung der digitalen Karte nur einzelne Bereiche aktualisiert werden. In WO 2005/019773 A1 wird das dadurch entstehende Problem möglicher Inkonsistenzen erkannt; als Lösung wird vorgeschlagen, die Bereiche möglichst klein zu halten.

Zur Lösung des Problems der Inkonsistenzen wird in DE 103 37 621 A1 vorgeschlagen, zunächst fahrzeugseitig eine zu aktualisierende Element-Teilmenge der digitalen Karte auszuwählen und eine Aktualisierung dieser Element-Teilmenge anzufordern. Nach dem Empfang einer solchen Anforderung wird von der Zentrale zusätzlich zur zu aktualisierenden Element-Teilmenge eine zusätzliche Element-Teilmenge automatisch derart selektiert, dass die digitale Karte nach der Aktualisierung in sich konsistent ist. Mit anderen Worten wird also von einem Zentralrechner eine angeforderte Menge von Kartenobjekten derart ergänzt, dass die durch die Aktualisierung entstehende digitale Karte in sich konsistent ist. In der Praxis haben sich derartige Verfahren, bei denen anhand einer in einer zentralen Datenbank gespeicherten digitalen Karte alle für eine konsistente Kartenänderung benötigten Kartenobjekte bestimmt werden, als aufwändig erwiesen. Dies liegt darin begründet, dass die Kartenobjekte einer digitalen Karte ein hohes Maß an wechselseitigen Abhängigkeiten aufweisen. Bekannte Verfahren zur Konsistenzprüfung führen daher in der Praxis zu einer "Kettenreaktion", so dass große Teile der digitalen Karte aktualisiert werden, was dem Bedürfnis nach einer möglichst geringen übertragenen Datenmenge zuwiderläuft.

Digitale Karten werden in der Regel von Kartenanbietern in Zentraldatenbanken zur Verfügung gestellt. Diese Zentraldatenbanken sind über Zentralrechner, beispielsweise Internet-Server, zugänglich. Zur Aktualisierung der digitalen Karte in der Zentraldatenbank werden zunächst neue Kartenobjekte erfasst, beispielsweise durch Erfassungsfahrten mit Erfassungsfahrzeugen des Kartenanbieters. Diese neuen Kartenobjekte werden der Datenbank hinzugefügt, aber noch nicht zugänglich gemacht. Zu einem bestimmten Zeitpunkt erfolgt ein sogenannter "Freeze" des Datenbestandes. Es können dann also keine weiteren Kartenobjekte mehr hinzugefügt oder aktualisiert werden. Die gesamte digitale Karte wird anschließend auf Konsistenz geprüft und soweit nötig korrigiert und / oder ergänzt. Anschließend wird die so entstandene aktuelle Version der digitalen Karte freigegeben, d.h. zugänglich gemacht. Mit anderen Worten wird eine digitale Karte also nicht "fortlaufend" aktualisiert. Vielmehr werden aktualisierte Versionen der digitalen Karte in bestimmten zeitlichen Abständen publiziert.

Ausgehend vom Stand der Technik stellt sich die Aufgabe, die Aktualisierung einer in einem Fahrzeug gespeicherten digitalen Karte derart zu verbessern, dass die aktualisierte Karte konsistent ist und zugleich die übertragene Datenmenge gering ist.

Die Aufgabe wird gelöst bei einem Verfahren mit den Merkmalen des unabhängigen Anspruchs 1. Weitere Aspekte der Erfindung betreffen ein Verfahren mit den Merkmalen des unabhängigen Anspruchs 5, ein Fahrzeug gemäß Anspruch 6 sowie einen Zentralrechner gemäß Anspruch 7. Vorteilhafte Weiterbildungen der Erfindung sind Gegenstände der abhängigen Ansprüche.

Der erfinderische Gedanke schlägt sich bereits bei der Datenhaltung in der Zentraldatenbank nieder. Aspekte der Erfindung betreffen daher ein Verfahren zur Durchführung eines Änderungsvorgangs einer in einer Zentraldatenbank gespeicherten digitalen Karte, wobei die Karte eine Vielzahl von Kartenobjekten umfasst. Ein Kartenobjekt kann beispielsweise eine Straße oder ein Straßenabschnitt (auch als "Link" bezeichnet) oder ein "point of interest" (POI) sein. Jedem Kartenobjekt sind ein Objektbezeichner und eine Versionsnummer zugeordnet.

Zur Durchführung des Änderungsvorgangs werden erfindungsgemäß die folgenden Schritte durchgeführt. Zunächst wird zumindest ein Kartenobjekt geändert. Die jeweilige Versionsnummer jedes geänderten Kartenobjekts wird inkrementiert, also um einen Zähler erhöht. Dies ist nicht einschränkend auf eine Inkrementierung natürlicher Zahlen zu verstehen. Dem Fachmann ist eine Vielzahl unterschiedlicher Verfahren zur Datenhaltung von Versionsnummern bekannt, die sich für den vorliegenden Einsatzzweck eignen. Weiter erfindungsgemäß wird ein Änderungsvorgangs-Datensatz gespeichert, welcher
- den Objektbezeichner des zumindest einen geänderten Kartenobjekts,
- die vor dem Änderungsvorgang gültige und / oder die inkrementierte Versionsnummer des zumindest einen geänderten Kartenobjekts und
- einen Bezeichner des Änderungsvorgangs
umfasst.

Wird bei einem Änderungsvorgang ein Kartenobjekt neu hinzugefügt, so wird diesem eine Versionsnummer zugeordnet, die einen Rückschluss darauf zulässt, dass es sich um ein neu hinzugefügtes Kartenobjekt handelt (z.B. "Version 1").

Mit anderen Worten werden also erfindungsgemäß nicht nur Änderungen an der digitalen Karte vorgenommen, sondern diese Änderungen werden auch dokumentiert. Auf diese Weise ist zu späteren Zeitpunkten nachvollziehbar, auf welche Weise die digitale Karte geändert wurde. Insbesondere ist nachvollziehbar, welche Kartenobjekte miteinander im Zuge eines Änderungsvorgangs geändert wurden. Es sei darauf hingewiesen, dass erfindungsgemäß nicht erforderlich ist, dass ältere Versionen als die aktuelle Version eines Kartenobjekts selbst gespeichert werden. Es entsteht daher kein nennenswerter zusätzlicher Bedarf an Speicherplatz für die Umsetzung der Erfindung.

Das vorstehend beschriebene erfindungsgemäße Verfahren zur Durchführung eines Änderungsvorgangs einer in einer Zentraldatenbank gespeicherten digitalen Karte soll wie folgt genutzt werden. Ein Änderungsvorgang der digitalen Karte soll in sich eine konsistente Änderung der digitalen Karte bewirken. Anders ausgedrückt soll die digitale Karte nach dem Änderungsvorgang weiterhin konsistent sein. Dazu ist es notwendig, dass mit der Änderung eines ersten Kartenobjekts auch diejenigen weiteren Kartenobjekte geändert werden, die von der Änderung des ersten Kartenobjekts betroffen sind (sogenannte "abhängige Kartenobjekte"). Es wird dies nachstehend noch anhand eines Ausführungsbeispiels näher erläutert.

Es entfällt somit die eingangs beschriebene Notwendigkeit, die digitale Karte in bestimmten zeitlichen Abständen einem "Freeze" zu unterwerfen und gesamthaft auf Konsistenz zu prüfen. Stattdessen kann die digitale Karte nunmehr fortlaufend aktualisiert werden, wobei jeder einzelne Änderungsvorgang derart vorgenommen werden soll, dass die Konsistenz der Karte erhalten bleibt.

Der der Erfindung zugrunde liegende Gedanke schlägt sich überdies nieder bei einem Verfahren zur Aktualisierung einer in einem Fahrzeug gespeicherten digitalen Karte. Die Karte umfasst eine Vielzahl von Kartenobjekten, wobei jedem Kartenobjekt ein Objektbezeichner und eine Versionsnummer zugeordnet sind. Mit anderen Worten entspricht die Struktur der im Fahrzeug gespeicherten digitalen Karte derjenigen der in der Zentraldatenbank gespeicherten digitalen Karte. Allerdings können einige oder alle der Kartenobjekte der im Fahrzeug gespeicherten Karte nicht auf dem (durch die digitale Karte in der Zentraldatenbank gegebenen) aktuellen Stand sein. Dies kann auch einschließen, dass ein bestimmtes Kartenobjekt im Fahrzeug gar nicht gespeichert ist, wenn nämlich dieses Kartenobjekt seit seinem Hinzufügen zur Zentraldatenbank nicht im Fahrzeug aktualisiert (in diesem Fall also erstmals hinzugefügt) worden ist.

Das Verfahren umfasst die folgenden Schritte.

Zunächst wird ein zu aktualisierendes erstes Kartenobjekt oder werden mehrere zu aktualisierende erste Kartenobjekte bestimmt. Anschließend wird ein Anforderungsdatensatz zur Aktualisierung des ersten Kartenobjekts oder der ersten Kartenobjekte von dem Fahrzeug an einen Zentralrechner übertragen. Es sei ausdrücklich darauf hingewiesen, dass dieser und alle nachfolgenden Verfahrensschritte auch für eine Mehrzahl erster Kartenobjekte durchgeführt werden können, worauf nachfolgend aber aus Gründen der besseren Lesbarkeit nicht mehr explizit hingewiesen wird. Der Anforderungsdatensatz umfasst den Objektbezeichner und die Versionsnummer des ersten Kartenobjekts. Der Zentralrechner kann beispielsweise ein Internet-Server eines Kartenanbieters sein, mit welchem das Fahrzeug über eine Mobilfunkverbindung Daten austauschen kann.

Im nächsten Schritt wird ein Änderungsvorgang des ersten Kartenobjekts gegenüber der durch die gesendete Versionsnummer bezeichneten Version des ersten Kartenobjekts bestimmt. Mit anderen Worten wird also geprüft, ob die im Fahrzeug gespeicherte Version des ersten Kartenobjekts aktuell ist. Ist dies nicht der Fall, so wurde das erste Kartenobjekt im Wege mindestens eines Änderungsvorgangs in der Zentraldatenbank aktualisiert. Es werden dann also diejenigen Änderungsvorgänge bestimmt, durch die das erste Kartenobjekte von seiner früheren (im Fahrzeug vorhandenen) auf seine aktuelle (in der Zentraldatenbank vorhandenen) Version geändert wurde. Jeder solche Änderungsvorgang weist einen Bezeichner auf.

Im nächsten Schritt werden für jeden zuvor identifizierten Änderungsvorgang die bei diesem Änderungsvorgang geänderten weiteren Kartenobjekte bestimmt. Anschließend wird ein Aktualisierungsdatensatz zusammengestellt, der
- eine aktuelle Version des ersten Kartenobjekts,
- die Versionsnummer der aktuellen Version des ersten Kartenobjekts und
- den jeweiligen Objektbezeichner und die jeweilige Versionsnummer der weiteren Kartenobjekte
umfasst. Dieser Aktualisierungsdatensatz wird von dem Zentralrechner an das Fahrzeug übertragen.

Mit anderen Worten sieht die Erfindung also vor, dass das Fahrzeug zunächst eine aktuelle Version eines ganz bestimmten Kartenobjekts (nämlich des ersten Kartenobjekts) anfordert. Nur von diesem ersten Kartenobjekt wird dem Fahrzeug eine aktuelle Version (einschließlich der Information über die entsprechende Versionsnummer) übertragen. Zusätzlich erhält das Fahrzeug jedoch als Teil des Aktualisierungsdatensatzes Informationen darüber, welche weiteren Kartenobjekte zusammen mit dem ersten Kartenobjekt geändert wurden. Wie vorstehend erläutert wurde, wird das Verfahren zur Durchführung eines Änderungsvorgangs der digitalen Karte vorteilhafterweise derart genutzt, dass bei einem Änderungsvorgang mehrere Kartenobjekte derart miteinander geändert werden, dass im Ergebnis die Konsistenz der digitalen Karte gewahrt bleibt. Im Umkehrschluss versetzt daher die in dem erfindungsgemäß an das Fahrzeug übertragenen Aktualisierungsdatensatz enthaltene Information das Fahrzeug in die Lage, die Konsistenz seiner digitalen Karte zu prüfen und ggf. durch weitere Schritte herzustellen.

Hierzu können mit Vorteil die in dem Aktualisierungsdatensatz enthaltenen Versionsnummern der weiteren Kartenobjekte mit den Versionsnummern der in der in dem Fahrzeug gespeicherten digitalen Karte enthaltenen weiteren Kartenobjekte verglichen werden. Es können sodann die zu aktualisierenden weiteren Kartenobjekte bestimmt werden. Hierzu kann bevorzugt geprüft werden, ob und ggf. in welcher Version die weiteren Kartenobjekte in der im Fahrzeug gespeicherten digitalen Karte enthalten sind. Ist ein weiteres Kartenobjekt nicht in der im Fahrzeug gespeicherten digitalen Karte enthalten oder ist die Versionsnummer eines in der im Fahrzeug gespeicherten digitalen Karte enthaltenen weiteren Kartenobjekts niedriger als die als Teil des Aktualisierungsdatensatzes übermittelte Versionsnummer des weiteren Kartenobjekts, so kann dieses weitere Kartenobjekt als zu aktualisierendes weiteres Kartenobjekt bestimmt werden. Für jedes derartige zu aktualisierende weitere Kartenobjekt kann nunmehr das erfindungsgemäße Verfahren von vorne durchgeführt werden.

Mit besonderem Vorteil wird das Verfahren iterativ durchgeführt, bis keine zu aktualisierenden weiteren Kartenobjekte bestimmt wurden. Im Ergebnis liegt dann im Fahrzeug eine konsistente digitale Karte vor, da zu jedem aktualisierten Kartenobjekt die abhängigen Kartenobjekt geprüft und ggf. ebenfalls aktualisiert worden sind.

In weiterer Ausgestaltung kann der Schritt des Bestimmens der zu aktualisierenden ersten und / oder weiteren Kartenobjekte ein Bestimmen der in einem vorbestimmten Umkreis um einen Standort des Fahrzeugs gelegenen Kartenobjekte umfassen. Bei aktivierter Zielführung, wenn also ein Zielort eingestellt und eine Fahrtroute zu dem Zielort berechnet ist, kann alternativ oder zusätzlich der Schritt des Bestimmens der zu aktualisierenden ersten und / oder weiteren Kartenobjekte ein Bestimmen der entlang der Fahrtroute von dem Standort des Fahrzeugs zu dem Zielort gelegenen Kartenobjekte umfassen. Um auch den möglichen Fall abzudecken, dass der Fahrer des Fahrzeugs leicht von der Fahrtroute abweicht (z.B. um in der Nähe ein Restaurant für eine Fahrtpause aufzusuchen oder eine Sehenswürdigkeit anzusehen), kann zusätzlich oder alternativ der Schritt des Bestimmens der zu aktualisierenden ersten und / oder weiteren Kartenobjekte ein Bestimmen der innerhalb eines Korridors vorbestimmter Breite um die Fahrtroute gelegenen Kartenobjekte umfassen.

In weiterer Ausgestaltung kann vorgesehen sein, dass im Anschluss an die Aktualisierung der entlang und / oder nahe der Fahrtroute gelegenen Kartenobjekte die Berechnung der Fahrtroute wiederholt wird. Es ist denkbar, dass sich aufgrund der Kartenaktualisierung eine abweichende Fahrtroute ergibt. In diesem Fall kann vorgesehen sein, dass Verfahren nochmals mit der geänderten Fahrtroute durchzuführen. Auch dies kann iterativ so lange wiederholt werden, bis sich keine Änderung der Fahrtroute mehr ergibt und / oder keine zu aktualisierenden Kartenobjekte bestimmt werden.

Die Erfindung umfasst ferner ein zur Anordnung in einem Fahrzeug vorgesehenes Steuergerät, welches zur Durchführung der fahrzeugseitig auszuführenden Verfahrensschritte des vorstehend beschriebenen Verfahrens eingerichtet ist. Ein solches Steuergerät kann insbesondere eine sogenannte Headunit sein oder umfassen. Die Erfindung umfasst ferner ein Fahrzeug mit einem solchen Steuergerät.

Die Erfindung umfasst ferner einen Zentralrechner, der zur Durchführung der zentralrechnerseitig auszuführenden Verfahrensschritte des vorstehend beschriebenen Verfahrens eingerichtet ist.

Schließlich umfasst die Erfindung ein Computerprogrammprodukt umfassend Instruktionen, welche, wenn Sie auf dem Steuergerät und / oder dem Zentralrechner ausgeführt werden, die Ausführung der vorstehend beschriebenen Verfahrensschritte bewirken.

Weitere Ausführungsformen der Erfindung werden nachfolgend anhand beispielhafter Darstellungen erläutert. Es zeigen
- Fig. 1: einen Ablauf einer Datenkommunikation gemäß einer Ausführungsform des erfindungsgemäßen Verfahrens und
- Fig. 2: eine ausschnittsweise Darstellung von Kartenobjekten in einer Zentraldatenbank.

Gleiche Bezugszeichen kennzeichnen in den Figuren gleiche oder gleich wirkende Merkmale der dargestellten Ausführungsformen der Erfindung. Es wird darauf hingewiesen, dass es sich bei den dargestellten Figuren sowie der zugehörigen Beschreibung lediglich um Ausführungsbeispiele der Erfindung handelt. Insbesondere sind Darstellungen von Merkmalskombinationen in den Figuren und / oder der Figurenbeschreibung nicht dahingehend auszulegen, dass die Erfindung zwingend die Verwirklichung aller genannten Merkmale erfordert. Andere Ausführungsformen der Erfindung können weniger, mehr und / oder andere Merkmale enthalten. Der Schutzbereich und die Offenbarung der Erfindung ergeben sich aus den beiliegenden Patentansprüchen und der vollständigen Beschreibung. Es wird zudem darauf hingewiesen, dass es sich bei den Darstellungen um Prinzipdarstellungen von Ausführungsformen der Erfindung handelt. Die Anordnung der einzelnen dargestellten Elemente zueinander ist nur beispielhaft gewählt und kann bei anderen Ausführungsformen der Erfindung anders gewählt werden.

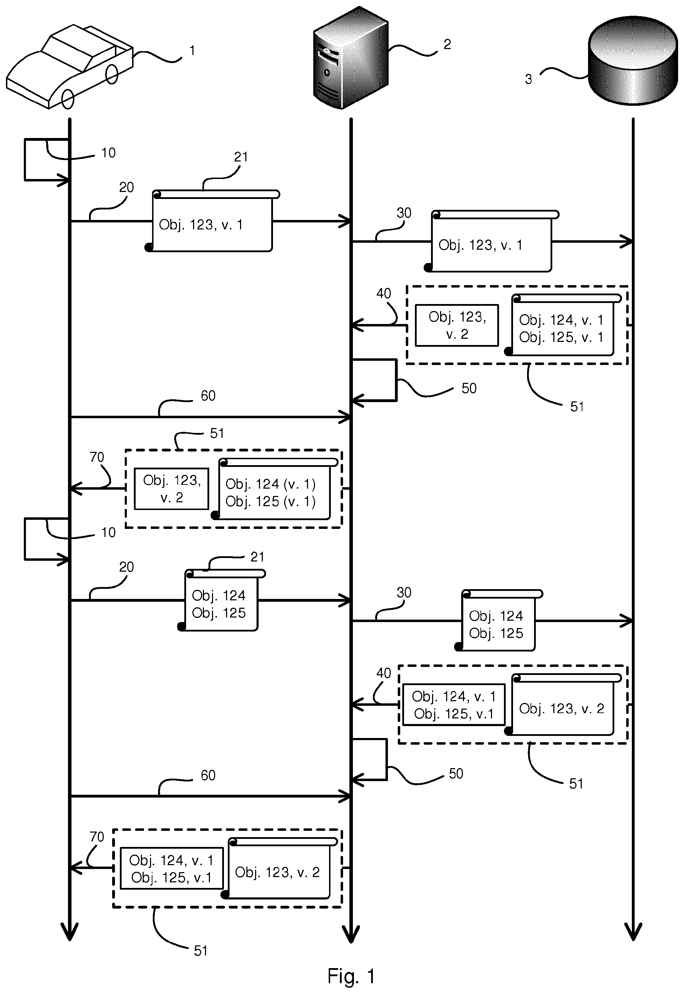

In Fig. 1 ist ein Ablauf einer Datenkommunikation zwischen einem Fahrzeug 1, einem Zentralrechner 2 und einer Zentraldatenbank 3 dargestellt. Es sei darauf hingewiesen, dass der Zentralrechner 2 und die Zentraldatenbank 3 auch eine gemeinsame Einheit bilden können. Insbesondere kann die Zentraldatenbank 3 Bestandteil des Zentralrechners 2 sein. Bei dem Zentralrechner 2 kann es sich insbesondere um einen über das Internet zugänglichen Server eines Kartenanbieters handeln. Die Verbindung zwischen dem Fahrzeug 1 und dem Zentralrechner 2 (die also einer Verbindung zwischen dem Fahrzeug 1 und dem Internet entsprechend kann) kann beispielsweise mittels drahtloser Datenkommunikation hergestellt werden. Insbesondere kann das Fahrzeug 1 hierfür über ein Telematikmodul verfügen, dass zur drahtlosen Datenkommunikation über WLAN und / oder Mobilfunknetze (z.B. LTE, UMTS, etc.) eingerichtet ist.

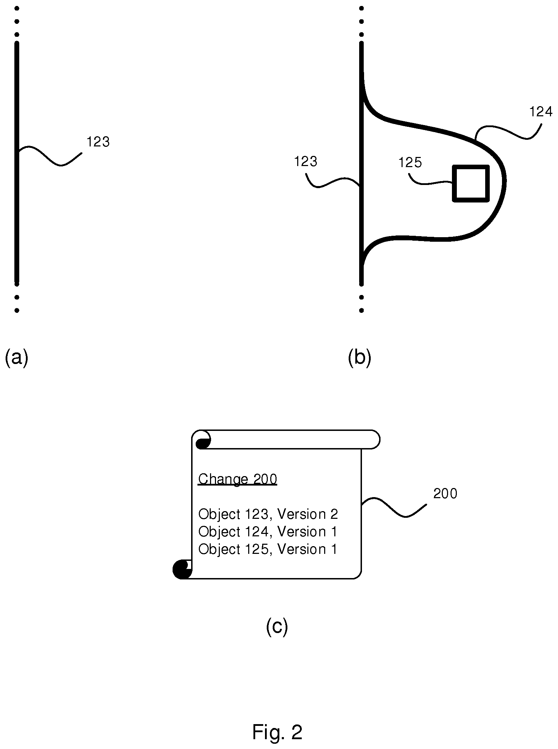

In einem ersten Verfahrensschritt 10 bestimmt das Fahrzeug 1 ein zu aktualisierendes erstes Kartenobjekt. Im vorliegenden Beispiel wurde als zu aktualisierendes erstes Kartenobjekt das Objekt 123 bestimmt. Bei dem Objekt 123 handelt es sich, wie in Fig. 2 (a) dargestellt, um einen Straßenabschnitt ("link"). Die gepunktete Darstellung der Enden der Straße in Fig. 2 (a) soll andeuten, dass diese sich in beide Richtungen fortsetzt. Der Grund, warum bei der Ausführung des Verfahrensschritts 10 das Objekt 123 als zu aktualisierendes erstes Kartenobjekt bestimmt wurde, kann beispielsweise darin bestehen, dass ein Navigationssystem des Fahrzeugs 1 eine Fahrtroute von dem gegenwärtigen Standort des Fahrzeugs 1 zu einem Zielort errechnet hat, welche den durch das Kartenobjekt 123 repräsentierten Straßenabschnitt umfasst.

Mit Bezug zu den Teilfiguren (a), (b) und (c) der Fig. 2 soll nun zunächst ein praktisches Ausführungsbeispiel des erfindungsgemäßen Verfahrens zur Durchführung eines Änderungsvorgangs der in der Zentraldatenbank 3 gespeicherten digitalen Karte erläutert werden. Dabei stellt die Fig. 2 (a) einen früheren, die Fig. 2 (b) einen späteren Stand der digitalen Karte dar. Ein Vergleich der beiden Teilfiguren (a) und (b) zeigt, dass die den Straßenabschnitt 123 umfassende Straße um eine Umgehungsstraße 124 erweitert wurde. An der Umgehungsstraße 124 liegt ein Objekt 125, bei dem es sich beispielsweise um einen "point of interest" (POI) handeln kann, beispielsweise eine Tankstelle 125. Der Bau der Umgehungsstraße 124 und der Tankstelle 125 kann noch weitere Änderungen der digitalen Karte erforderlich machen, die lediglich aus Gründen einer vereinfachten Darstellung in Fig. 2 nicht gezeigt sind. Beispielsweise können die Ab- bzw. Zufahrten des Straßenabschnitts 123 zu bzw. von der Umgehungsstraße 124 durch gesonderte Kartenobjekte abgebildet sein.

Um die Konsistenz der digitalen Karte sicherzustellen, muss ein Änderungsvorgang eine Änderung aller digitalen Kartenobjekte 123, 124, 125 umfassen, die wechselseitige Abhängigkeiten aufweisen. Beispielsweise wäre es nicht möglich, bei einem Änderungsvorgang der digitalen Karte lediglich die Tankstelle 125 hinzuzufügen. Es gäbe dann in der derart geänderten digitalen Karte nämlich keine Möglichkeit, zu der Tankstelle 125 zu gelangen. Ebenso würde es nicht zu einer konsistenten digitalen Karte führen, die Umgehungsstraße 124 zu erfassen, nicht aber deren Anbindung an den Straßenabschnitt 123 (z.B. Abfahrten, Zufahrten, Kreuzungen oder Ähnliches; in Fig. 2 nicht gesondert bezeichnet). Dem Fachmann sind Verfahren, Vorgehensweisen und Werkzeuge bekannt, Änderungen einer digitalen Karte so durchzuführen, dass diese im Ergebnis konsistent ist. Diese Verfahren sind nicht Bestandteil der vorliegenden Erfindung. Für die vorliegende Erfindung ist es jedoch wichtig, dass jeder Änderungsvorgang zu einer konsistenten digitalen Karte führt.

Der in Fig. 2 (a) dargestellte frühere Stand des Kartenobjekts 123 hat die Versionsnummer 1. Der in Fig. 2 (b) dargestellte spätere Stand der digitalen Karte weist die neu hinzugefügten Objekte 124, 125 und eine spätere Version des Objekts 123 auf. Es haben daher die Objekte 124, 125 jeweils die Versionsnummer 1, wohingegen die Versionsnummer des Objekts 123 inkrementiert wurde und nunmehr 2 ist. In der Zentraldatenbank 3 wird zusätzlich zu den eigentlichen Kartenobjekten 123, 124, 125 ein Änderungsvorgangs-Datensatz 200 gespeichert. Dieser ist in Fig. 2 (c) dargestellt. Der Änderungsvorgangs-Datensatz 200 umfasst
- einen Bezeichner des Änderungsvorgangs ("Change 200"),
- die Objektbezeichner der geänderten Kartenobjekte 123, 124, 125 ("Object 123", "Object 124", "Object 125") sowie
- die inkrementierten Versionsnummern der geänderten Kartenobjekte 123, 124, 125; dabei erhält das geänderte Kartenobjekt 123 die inkrementierte Versionsnummer 2 ("Version 2"), wohingegen die neu hinzugefügten Kartenobjekte 124, 125 die Versionsnummer 1 ("Version 1") erhalten.

Nach Abschluss des erfindungsgemäßen Verfahrens zur Durchführung des Änderungsvorgangs der digitalen Karte enthält die digitale Karte also lediglich die in Fig. 2 (b) dargestellten Versionen der Kartenobjekte 123, 124, 125. Es kann jedoch mittels des ebenfalls in der Kartendatenbank 3 gespeicherten Änderungsvorgangs-Datensatzes 200 nachvollzogen werden, welche Kartenobjekte aufgrund ihrer Abhängigkeiten miteinander geändert worden sind.

Es wird nun mit Bezug zu Fig. 1 die beispielhafte Ausführung des Verfahrens zur Aktualisierung der in dem Fahrzeug 1 gespeicherten digitalen Karte weiter erläutert. In Schritt 20 überträgt das Fahrzeug einen Anforderungsdatensatz 21 zur Aktualisierung des ersten Kartenobjekts 123 an den Zentralrechner 2. Der Aktualisierungsdatensatz 21 enthält den Objektbezeichner ("Object 123") und die Versionsnummer ("v. 1") des ersten Kartenobjekts 123.

In Schritt 30 gibt der Zentralrechner 2 die von dem Fahrzeug 1 empfangenen Informationen an die Zentraldatenbank 3 weiter und bestimmt so einen Änderungsvorgang 200 des ersten Kartenobjekts 123 gegenüber der durch die gesendete Versionsnummer bezeichneten Version des ersten Kartenobjekts 123. Mit anderen Worten erfolgt also in diesem Schritt 30 eine Abfrage des Zentralrechners 2 an die Zentraldatenbank 3, ob und gegebenenfalls welche Änderungen an dem Kartenobjekt 123 seit der Versionsnummer 1 stattgefunden haben.

Im vorliegenden Beispiel liegt in der Zentraldatenbank 3 eine aktualisierte Version des Kartenobjekts 123 vor, nämlich Versionsnummer 2. Die Änderung des Kartenobjekts 123 von Versionsnummer 1 auf Versionsnummer 2 wurde im Zuge des Änderungsvorgangs 200 vorgenommen. Anhand des zugehörigen Änderungsvorgangs-Datensatzes 200 kann die Zentraldatenbank 3 in Schritt 40 bestimmen, ob und gegebenenfalls welche weiteren Kartenobjekte bei dem Änderungsvorgang 200 geändert wurden. In diesem Fall sind dies die Kartenobjekte 124, 125, die im Zuge des Änderungsvorgangs 200 neu hinzugefügt wurden und daher jeweils die Versionsnummer 1 tragen.

Im nachfolgenden Schritt 50 stellt der Zentralrechner 2 einen Aktualisierungsdatensatz 51 zusammen, der die vorstehend beschriebenen Daten und Informationen enthält, nämlich:
- die aktuelle Version des ersten Kartenobjekts 123 sowie dessen Versionsnummer ("v. 2") und
- den jeweiligen Objektbezeichner und die jeweilige Versionsnummer der weiteren Kartenobjekte 124, 125.

Es sei darauf hingewiesen, dass die weiteren Kartenobjekte 124, 125 selbst nicht Teil des Aktualisierungsdatensatzes 51 sind. Der Aktualisierungsdatensatz 51 umfasst lediglich die zur eindeutigen Identifizierung dieser Kartenobjekte 124, 125 notwendige Information. Auf diese Weise kann Fahrzeug 1 später zunächst prüfen, ob ihm die aktuellen Versionen der weiteren Kartenobjekte 124, 125 bereits vorliegen oder ob es diese auch noch von dem Zentralrechner 2 anfordern muss.

Es sei darauf hingewiesen, dass die von Zentralrechner 2 und Zentraldatenbank 3 durchgeführten Schritte 30, 40, 50 nicht notwendigerweise in der hierin dargestellten und beschriebenen Form und Reihenfolge ausgeführt werden müssen. Jede dem Fachmann bekannte Möglichkeit einer Datenbankabfrage, die die Inhalte des Aktualisierungsdatensatzes 51 zum Ergebnis hat, kann für das Verfahren verwendet werden.

In Schritt 70 wird der Aktualisierungssatz 51 von dem Zentralrechner 2 an das Fahrzeug 1 übertragen. Es kann bei manchen Ausführungsformen der Erfindung vorgesehen sein, dass dies erst auf explizite Anforderung 60 durch das Fahrzeug 1 geschieht. Bei anderen Ausführungsformen ist eine solche Anforderung 60 nicht vorgesehen und der Zentralrechner 2 führt die Übertragung 70 des Aktualisierungsdatensatzes 51 direkt im Anschluss an das Zusammenstellen 50 des Aktualisierungsdatensatzes 51 durch. Eine explizite Anforderung 60 kann vorteilhaft sein, wenn das Fahrzeug 1 den Aktualisierungsdatensatz 51 zu einem bestimmten Zeitpunkt übertragen bekommen möchte, zu welchem beispielsweise eine bessere Datenverbindung (z.B. eine WLAN-Verbindung oder eine Mobilfunkverbindung mit höherer Datenrate) besteht.

Als nächstes erfolgt im Fahrzeug 1 ein Vergleichen der in dem Aktualisierungsdatensatz 51 enthaltenen Versionsnummern der weiteren Kartenobjekte 124, 125 mit den Versionsnummern der gleichen Kartenobjekte 124, 125 in der digitalen Karte des Fahrzeugs 1 (Verfahrensschritt des Vergleichens in Fig. 1 nicht dargestellt). Im vorliegenden Beispiel wird dabei festgestellt, dass die weiteren Kartenobjekte 124, 125 bisher in der digitalen Karte des Fahrzeugs 1 nicht vorhanden sind. Daher werden die weiteren Kartenobjekte 124, 125 als zu aktualisierende weitere Kartenobjekte 124, 125 bestimmt. Ausgehend von diesem Schritt des Bestimmens 10 der zu aktualisierenden Kartenobjekte wird im Anschluss das bisherige Verfahren nochmals durchgeführt. Diese Wesensgleichheit der gegebenenfalls iterativ ausgeführten Verfahrensschritte ist in Fig. 1 durch die Verwendung gleicher Bezugszeichen für die jeweiligen Verfahrensschritte (10-70) gekennzeichnet.

Es werden also in Verfahrensschritt 10 die Kartenobjekte 124, 125 als zu aktualisierende Kartenobjekte bestimmt. Anschließend wird ein Anforderungsdatensatz 21 zur Aktualisierung der Kartenobjekte 124, 125 von dem Fahrzeug 1 an den Zentralrechner 2 übertragen (Schritt 20). Die Verfahrensschritte 30, 40, 50 führen in der bereits beschriebenen Art zur Zusammenstellung eines Aktualisierungsdatensatzes 51. Dieser enthält nun die aktuellen Versionen der Kartenobjekte 124, 125 sowie die zugehörigen Versionsnummern (jeweils "v. 1"). Die Kartenobjekte 124, 125 wurden bei dem Änderungsvorgang 200 in die digitale Karte eingefügt. Wie in Fig. 2 (c) dargestellt, wurde bei diesem Änderungsvorgang 200 auch das Kartenobjekt 123 geändert, nämlich auf die Versionsnummer 2 aktualisiert. Auch diese Information ist daher Bestandteil des Aktualisierungsdatensatzes 51, der in Schritt 70 von dem Zentralrechner 2 an das Fahrzeug 1 übertragen wird.

Zur Klarstellung sei darauf hingewiesen, dass in dem eben beschriebenen zweiten Durchlauf des Verfahrens die Kartenobjekte 124, 125 die zu aktualisierenden ersten Kartenobjekte darstellen, wohingegen das Kartenobjekt 123 ein weiteres Kartenobjekt darstellt.

Im weiteren Verlauf wird in dem Fahrzeug 1 wiederum die in dem Aktualisierungsdatensatz 51 enthaltene Versionsnummer des weiteren Kartenobjekts (mithin Kartenobjekt 123 mit der Versionsnummer 2) mit der Versionsnummer des in der in dem Fahrzeug 1 gespeicherten digitalen Karte enthaltenen weiteren Kartenobjekts verglichen. In diesem Fall ergibt der Vergleich, dass das Kartenobjekt 123 im Fahrzeug 1 bereits in der Version 2 vorliegt und somit nicht mehr aktualisiert werden muss. Da also keine zu aktualisierenden weiteren Kartenobjekte bestimmt wurden, wird das Verfahren beendet. Bevorzugt ist vorgesehen, dass erst zu diesem Zeitpunkt, wenn also alle zu aktualisierenden Kartenobjekte 123, 124, 125 im Fahrzeug 1 vorliegen, die Änderungen gesamthaft in die digitale Karte des Fahrzeugs 1 übernommen werden. Somit kann es auch während der Ausführung des Verfahrens zur Aktualisierung der Karte nicht zu Inkonsistenzen kommen.

## Patentansprüche

1. Verfahren zur Aktualisierung einer in einem Fahrzeug (1) gespeicherten digitalen Karte, wobei die Karte eine Vielzahl von Kartenobjekten (123, 124, 125) umfasst, wobei ein Kartenobjekt (123, 124, 125) ein Straßenabschnitt oder ein Point-of-Interest ist, wobei jedem Kartenobjekt (123, 124, 125) ein Objektbezeichner und eine Versionsnummer zugeordnet sind, mit den Schritten
- fahrzeugseitiges Bestimmen (10) eines zu aktualisierenden ersten Kartenobjekts (123),
- Übertragen (20) eines Anforderungsdatensatzes (21) zur Aktualisierung des ersten Kartenobjekts (123) von dem Fahrzeug (1) an einen Zentralrechner (2), wobei der Anforderungsdatensatz (21) den Objektbezeichner und die Versionsnummer des ersten Kartenobjekts (123) umfasst,
- zentralrechnerseitiges Bestimmen (30) eines Änderungsvorgangs des ersten Kartenobjekts (123) gegenüber der durch die gesendete Versionsnummer bezeichneten Version des ersten Kartenobjekts (123),
- zentralrechnerseitiges Bestimmen (40) von bei dem Änderungsvorgang geänderten weiteren Kartenobjekten (124, 125) anhand eines Änderungsvorgangs-Datensatzes (200),
- zentralrechnerseitiges Zusammenstellen (50) eines Aktualisierungsdatensatzes (51) umfassend
∘ eine aktuelle Version des ersten Kartenobjekts (123),
∘ die Versionsnummer der aktuellen Version des ersten Kartenobjekts (123) und
∘ den jeweiligen Objektbezeichner und die jeweilige Versionsnummer der weiteren Kartenobjekte (124, 125),
- Übertragen (70) des Aktualisierungsdatensatzes (51) von dem Zentralrechner (2) an das Fahrzeug (1).

2. Verfahren nach Anspruch 1 mit den weiteren Schritten
- Vergleichen der in dem Aktualisierungsdatensatz (51) enthaltenen Versionsnummern der weiteren Kartenobjekte (124, 125) mit den Versionsnummern der in der in dem Fahrzeug (1) gespeicherten digitalen Karte enthaltenen weiteren Kartenobjekte (124, 125),
- Bestimmen (10) der zu aktualisierenden weiteren Kartenobjekte (124, 125) und
- Durchführen (20-70) des Verfahrens nach Anspruch 1 für die zu aktualisierenden weiteren Kartenobjekte (124, 125).

3. Verfahren nach Anspruch 2, wobei das Verfahren iterativ durchgeführt wird, bis keine zu aktualisierenden weiteren Kartenobjekte bestimmt wurden.

4. Verfahren nach einem der vorhergehenden Ansprüche, wobei der Schritt des Bestimmens (10) der zu aktualisierenden ersten und / oder weiteren Kartenobjekte (123, 124, 125) ein Bestimmen der
- in einem vorbestimmten Umkreis um einen Standort des Fahrzeugs (1) und / oder
- entlang einer Fahrtroute von einem Standort des Fahrzeugs (1) zu einem Zielort und / oder
- innerhalb eines Korridors vorbestimmter Breite um eine Fahrtroute von einem Standort des Fahrzeugs (1) zu einem Zielort
gelegenen Kartenobjekte umfasst.

5. Verfahren zur Durchführung eines Änderungsvorgangs einer in einer Zentraldatenbank (3) gespeicherten digitalen Karte, wobei die Karte eine Vielzahl von Kartenobjekten (123, 124, 125) umfasst, wobei ein Kartenobjekt (123, 124, 125) ein Straßenabschnitt oder ein Point-of-Interest ist, wobei jedem Kartenobjekt (123, 124, 125) ein Objektbezeichner und eine Versionsnummer zugeordnet sind, mit den Schritten
- Ändern eines oder mehrerer wechselseitig abhängiger Kartenobjekte (123, 124, 125),
- Inkrementieren der Versionsnummer des einen oder der mehreren geänderten Kartenobjekte (123, 124, 125),
- Speichern eines Änderungsvorgangs-Datensatzes (200) umfassend
∘ Objektbezeichner des einen oder der mehreren geänderten Kartenobjekte (123, 124, 125),
∘ die vor dem Änderungsvorgang gültige und / oder die inkrementierte Versionsnummer des einen oder der mehreren geänderten Kartenobjekte (123, 124, 125) und
∘ einen Bezeichner des Änderungsvorgangs.

6. Fahrzeug (1) mit einem Steuergerät, das zur Durchführung der fahrzeugseitig auszuführenden Verfahrensschritte (10, 20) des Verfahrens nach einem der Ansprüche 1 bis 4 eingerichtet ist.

7. Zentralrechner (2), der zur Durchführung der zentralrechnerseitig auszuführenden Verfahrensschritte (30, 40, 50, 70) des Verfahrens nach einem der Ansprüche 1 bis 4 eingerichtet ist.

## Claims

1. Method for updating a digital map stored in a vehicle (1), wherein the map comprises a multiplicity of map objects (123, 124, 125), a map object (123, 124, 125) being a road section or a point of interest, wherein an object identifier and a version number are assigned to each map object (123, 124, 125), having the steps of
- determining (10), in the vehicle, a first map object (123) to be updated,
- transmitting (20) a request data record (21) for updating the first map object (123) from the vehicle (1) to a central computer (2), wherein the request data record (21) comprises the object identifier and the version number of the first map object (123),
- determining (30), in the central computer, an operation for changing the first map object (123) in comparison with that version of the first map object (123) which is identified by the transmitted version number,
- determining (40), in the central computer, further map objects (124, 125) changed during the change operation on the basis of a change operation data record (200),
- compiling (50), in the central computer, an update data record (51) comprising
∘ a current version of the first map object (123),
∘ the version number of the current version of the first map object (123), and
∘ the respective object identifier and the respective version number of the further map objects (124, 125),
- transmitting (70) the update data record (51) from the central computer (2) to the vehicle (1).

2. Method according to Claim 1, having the further steps of
- comparing those version numbers of the further map objects (124, 125) which are contained in the update data record (51) with the version numbers of the further map objects (124, 125) contained in the digital map stored in the vehicle (1),
- determining (10) the further map objects (124, 125) to be updated, and
- carrying out (20-70) the method according to Claim 1 for the further map objects (124, 125) to be updated.

3. Method according to Claim 2, wherein the method is carried out iteratively until no further map objects to be updated have been determined.

4. Method according to one of the preceding claims, wherein the step of determining (10) the first and/or further map objects (123, 124, 125) to be updated comprises determining the map objects
- in a predetermined radius around a location of the vehicle (1), and/or
- along a route from a location of the vehicle (1) to a destination, and/or
- within a corridor of a predetermined width around a route from a location of the vehicle (1) to a destination.

5. Method for carrying out an operation for changing a digital map stored in a central database (3), wherein the map comprises a multiplicity of map objects (123, 124, 125), a map object (123, 124, 125) being a road section or a point of interest, wherein an object identifier and a version number are assigned to each map object (123, 124, 125), having the steps of
- changing one or more mutually dependent map objects (123, 124, 125),
- incrementing the version number of the one or more changed map objects (123, 124, 125),
- storing a change operation data record (200) comprising
∘ the object identifier of the one or more changed map objects (123, 124, 125),
∘ the version number of the one or more changed map objects (123, 124, 125) which was valid before the change operation and/or has been incremented, and
∘ an identifier of the change operation.

6. Vehicle (1) having a control device which is set up to carry out those method steps (10, 20) of the method according to one of Claims 1 to 4 which are to be carried out in the vehicle.

7. Central computer (2) which is set up to carry out those method steps (30, 40, 50, 70) of the method according to one of Claims 1 to 4 which are to be carried out in the central computer.

## Revendications

1. Procédé de mise à jour d'une carte numérique mémorisée dans un véhicule (1), la carte comprenant une pluralité d'objets cartographiques (123, 124, 125), un objet cartographique (123, 124, 125) étant une section de route ou un point d'intérêt, un identificateur d'objet et un numéro de version étant associés à chaque objet cartographique (123, 124, 125), comprenant les étapes suivantes
- déterminer côté véhicule (10) un premier objet cartographique (123) à mettre à jour,
- transmettre (20) un jeu de données de demande (21) de mise à jour du premier objet cartographique (123) du véhicule (1) à un ordinateur central (2), le jeu de données de demande (21) comprenant l'identificateur d'objet et le numéro de version du premier objet cartographique (123),
- déterminer côté ordinateur central (30) une opération de modification du premier objet cartographique (123) par rapport à la version du premier objet cartographique (123) désignée par le numéro de version envoyé,
- déterminer côté ordinateur central (40) d'autres objets cartographiques (124, 125) modifiés lors de l'opération de modification à l'aide d'un jeu de données d'opération de modification (200),
- assembler côté ordinateur central (50) un jeu de données de mise à jour (51) comprenant
∘ une version actuelle du premier objet cartographique (123),
∘ le numéro de version de la version actuelle du premier objet cartographique (123), et
∘ l'identificateur d'objet respectif et le numéro de version respectif des autres objets cartographiques (124, 125),
- transmettre (70) le jeu de données de mise à jour (51) de l'ordinateur central (2) au véhicule (1).

2. Procédé selon la revendication 1, comprenant les étapes supplémentaires suivantes
- comparer les numéros de version des autres objets cartographiques (124, 125) contenus dans le jeu de données de mise à jour (51) aux numéros de version des autres objets cartographiques (124, 125) contenus dans la carte numérique mémorisée dans le véhicule (1),
- déterminer (10) les autres objets cartographiques (124, 125) à mettre à jour, et
- mettre en œuvre (20-70) le procédé selon la revendication 1 pour les autres objets cartographiques (124, 125) à mettre à jour.

3. Procédé selon la revendication 2, dans lequel le procédé est mis en œuvre de manière itérative jusqu'à ce qu'aucun autre objet cartographique à mettre à jour n'ait été déterminé.

4. Procédé selon l'une quelconque des revendications précédentes, dans lequel l'étape de détermination (10) des premiers et/ou autres objets cartographiques (123, 124, 125) à mettre à jour comprend une détermination des objets cartographiques situés
- dans un rayon prédéterminé autour d'un emplacement du véhicule (1) et/ou
- le long d'un itinéraire de déplacement d'un emplacement du véhicule (1) vers une destination et/ou
- à l'intérieur d'un couloir de largeur prédéterminée autour d'un itinéraire de déplacement d'un emplacement du véhicule (1) vers une destination.

5. Procédé de mise en œuvre d'une opération de modification d'une carte numérique mémorisée dans une base de données centrale (3), la carte comprenant une pluralité d'objets cartographiques (123, 124, 125), un objet cartographique (123, 124, 125) étant une section de route ou un point d'intérêt, un identificateur d'objet et un numéro de version étant associés à chaque objet cartographique (123, 124, 125), comprenant les étapes suivantes
- modifier un ou plusieurs objets cartographiques (123, 124, 125) interdépendants,
- incrémenter le numéro de version dudit ou desdits objets cartographiques modifiés (123, 124, 125),
- mémoriser un jeu de données d'opération de modification (200) comprenant
∘ l'identificateur d'objet dudit ou desdits objets cartographiques modifiés (123, 124, 125),
∘ le numéro de version valide avant l'opération de modification et/ou le numéro de version incrémenté dudit ou desdits objets cartographiques modifiés (123, 124, 125), et
∘ un identificateur de l'opération de modification.

6. Véhicule (1) comprenant une unité de commande configurée pour mettre en œuvre les étapes du procédé devant être exécutées côté véhicule (10, 20) selon l'une quelconque des revendications 1 à 4.

7. Ordinateur central (2) configuré pour mettre en œuvre les étapes du procédé devant être exécutées côté ordinateur central (30, 40, 50, 70) selon l'une quelconque des revendications 1 à 4.
